Europäisches Patentamt

European Patent Office

Office européen des brevets

(19)

(11) Numéro de publication: **0 270 454**
**B1**

(12) FASCICULE DE BREVET EUROPEEN

(45) Date de publication du fascicule du brevet:
25.04.90

(51) Int. Cl.⁴: **B62D 49/08**

(21) Numéro de dépôt: 87402689.1

(22) Date de dépôt: 27.11.87

(54) Dispositif à contrepoids en forme de plaques amovibles notamment pour véhicules à usage agricole.

(30) Priorité: 28.11.86  FR 8616635

(43) Date de publication de la demande:
08.06.88 Bulletin 88/23

(45) Mention de la délivrance du brevet:
25.04.90 Bulletin 90/17

(84) Etats contractants désignés:
DE GB

(56) Documents cités:
FR-A- 2 290 321
FR-A- 2 336 291

(73) Titulaire: RENAULT AGRICULTURE, 7, Rue Dewoltine,
F-78141 Velizy-Villacoublay(FR)

(72) Inventeur: Rolland, Marcel, 4, Square du Clermontois,
F-78310 Maurepas(FR)

(74) Mandataire: Ernst-Schonberg, Michel, R.N.U.R.
S. 0804 B.P. 103 8 & 10, avenue Emile-Zola,
F-92109 Boulogne Billancourt(FR)

## Description

L'invention concerne un dispositif à contrepoids en forme de plaques amovibles notamment pour véhicules à usage agricole, dans lequel un ensemble de plaques de fonte juxtaposées dans le sens transversal et suspendues sur un socle ou élément de châssis du véhicule, possèdent un évidement dont le flanc en forme de crochet est accroché à un talon s'étendant sur toute la longueur du socle, et des perçages transversaux recevant des boulon d'assemblage au travers dudit ensemble de plaques.

Selon un mode de réalisation connu par la publication FR-A 2 058 267 les plaques médianes accolées et assemblées entre elles sont également retenues par un axe vertical, porté par le socle, et disposé dans des évidements verticaux portés par ces plaques pour entourer de la sorte l'axe vertical et éviter la séparation accidentelle de l'ensemble des masses de leur socle.

Les procédés de fabrication des plaques ne permettent pas toujours un ajustage précis de celles-ci par rapport à l'axe vertical. Le jeu de montage des plaques est ainsi générateur de bruits de martèlement au cours des déplacements du véhicule.

Par ailleurs, les contraintes de cisaillement proportionnelles au nombre de plaques assemblées nécessitent un surdimensionnement de l'axe de retenue.

L'invention a pour objet un dispositif à contrepoids en forme de plaques amovibles qui apporte une solution satisfaisante au problème précité et qui présente en outre l'avantage d'une simplicité de conception.

Conformément à l'invention, la face inférieure du solce comporte un bossage à contour convexe accolé aux parois correspondantes d'un évidement simultanément formé sur deux plaques juxtaposées de sorte que les orientations respectives dudit contour et desdites parois coopèrent pour générer un effort d'appui des plaques contre la face frontale du socle et sur le contour du bossage lorsque lesdites plaques juxtaposées sont serrées l'une en direction de l'autre sous l'effet de boulons de liaison.

Le dispositif ainsi réalisé présente en outre l'avantage de favoriser l'autopositionnement des plaques par une mise sous tension des organes d'assemblage transversaux de celles-ci. Le mode de fonctionnement précité assure dans une large mesure le rattrapage automatique des jeux de montage et réduit par voie de conséquence notablement le bruit de martelage au cours du déplacement du véhicule.

D'autres caractéristiques et avantages du dispositif ressortiront de la description qui suit d'une forme de réalisation de celui-ci, faite en référence au dessin annexé, dans lequel :

- la figure 1 est une vue en coupe selon la ligne 1-1 de la figure 2 du dispositif à contrepoids;
- la figure 2 est une vue en perspective du dispositif formé par un ensemble de quatre plaques ;
- la figure 3 est une vue éclatée du dispositif représenté sur la figure 2 ;
- la figure 4 est une représentation à un plus grande échelle du mode de réalisation de l'appui des plaques contre le bossage ;
- la figure 5 est une représentation schématique du mode de rattrapage des jeux de montage du dispositif.

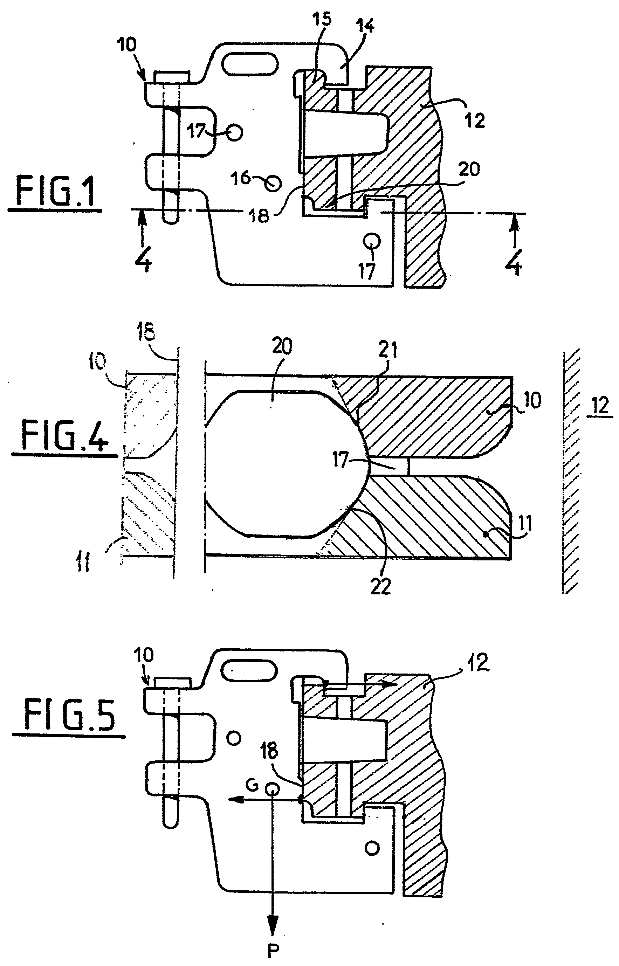

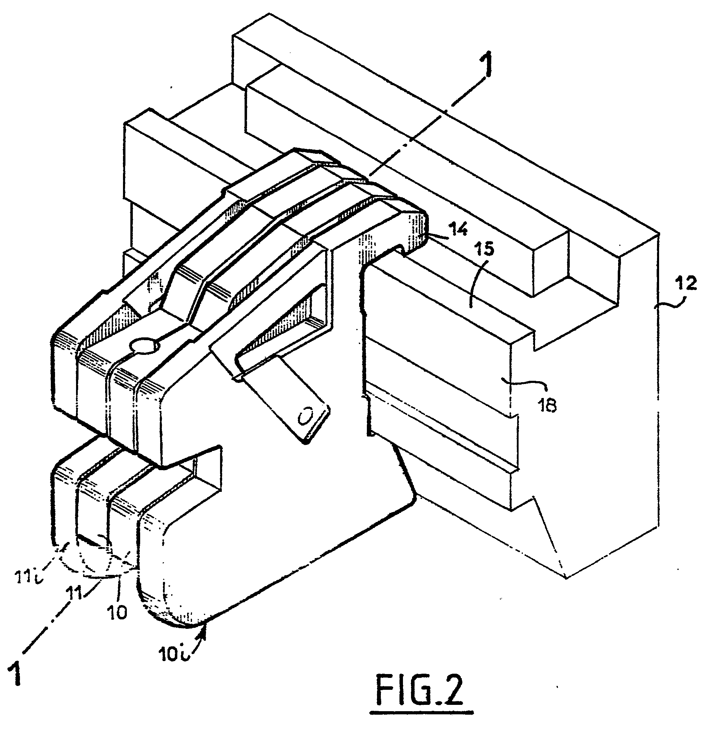

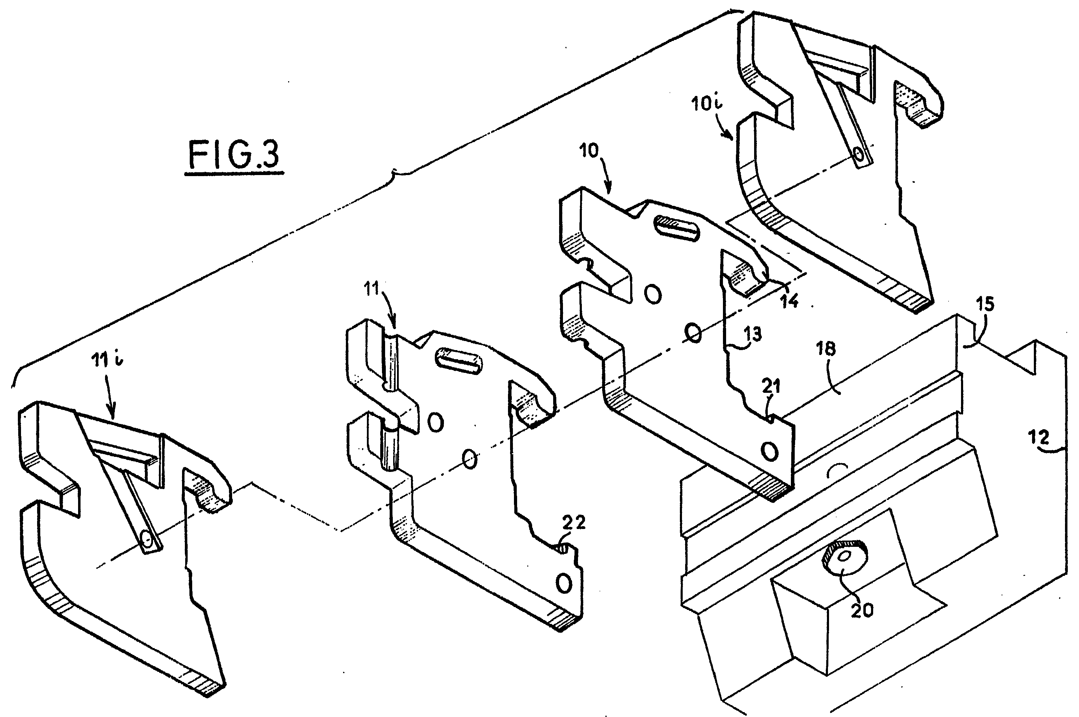

Le dispositif à contrepoids représenté aux figures 1 à 3 est constitué par un ensemble de plaques juxtaposées qui s'étendent transversalement au tracteur et qui sont suspendues à un socle ou élément 12 de châssis. A cet effet, chaque plaque possède un évidement 13 avec un flanc en forme de crcchet 14 accroché à un talon 15 qui s'étend sur toute la longueur du socle 12.

L'ensemble des plaques est ainsi constitué à partir de deux plaques médianes 10, 11 disposées dans le plan longitudinal médian du véhicule auxquelles sont accolées des plaques adjacentes $10_i$ - $11_i$.

Les différentes plaques 10 - $10_i$ - 11 - $11_i$ possèdent par ailleurs un perçage transversal recevant un boulon 16 d'assemblage au travers dudit ensemble.

Selon l'invention, la base inférieure du socle 12 comporte un bossage 20 à contour partiellement convexe tournant sa convexité vers la paroi correspondante de l'évidement 13 formant des talons d'appui 21, 22 des plaques médianes 10, 11 sur le bossage 20. Les plaques médianes 10, 11 sont plaquées par des liaisons 17 contre le bossage 20 et s'appliquent par ailleurs par gravité contre le socle 12.

Le socle 12 présente à cet effet une face frontale 18 d'appui des plaques 10, 11 comme cela est montré à la figure 5.

Sous l'effet des liaisons 17 les plaques médianes 10, 11, les talons 21, 22 formés sur l'évidement 13 des plaques sont en appui respectivement sur le contour convexe du bossage 20. Le poids P exerce par ailleurs un couple de basculement des plaques qui a pour effet de les appliquer sur la face frontale 18 du socle 12 dès que les plaques sont accrochées par leur crochet 14 sur le talon 15 du socle 12. Le poids P maintient de la sorte les plaques en position ou d'appui sur la face frontale 18 du socle 12 et permet l'absorption des jeux de montage longitudinaux. On serre ensuite les vis ou boulons de liaison 17 dans le but de mettre les plaques 10, 11 en contrainte sur le bossage 20 et d'absorber les jeux de montage longitudinaux. Le dispositif à contrepoids est ainsi mis en place à la suite de l'adjonction des plaques latérales $10_i$, $11_i$.

## Revendications

1. Dispositif à contrepoids en forme de plaques amovibles notamment pour véhicules à usage agricole, dans lequel un ensemble de plaques (10, $10_i$–11, $11_i$) juxtaposées dans le sens transversal et suspendues sur un socle ou élément (12) de châssis du véhicule possèdent un évidement (13) dont le flanc en forme de crochet (14) est accroché à un talon (15) s'étendant sur toute la longueur du socle, et un perçage transversal recevant un boulon (16) d'assemblage au travers dudit ensemble de plaques, caractérisé par le fait que la face inférieure du socle (12)

comporte un bossage (20) à contour convexe accolé aux parois correspondantes (21, 22) de l'évidement (13) simultanément formé sur deux plaques (10, 11) juxtaposées, les orientations respectives dudit contour et desdites parois coopérant de façon à générer un effort d'appui des plaques (10, 11) contre la face frontale (18) du socle (12) et sur le contour du bossage lorsque lesdites plaques (10, 11) juxtaposées sont serrées l'une en direction de l'autre sous l'effet de boulons de liaison (17).

2. Dispositif à contrepoids selon la revendication 1, caractérisé par le fait que les plaques médianes (10, 11) sont reliées entre elles par deux boulons de liaison (17) de mise en appui desdites plaques (10, 11) sur le bossage (20).

**Patentansprüche**

1. Abnehmbare plattenförmige Gegengewichtvorrichtung insbesondere für Landwirtschaftsfahrzeuge, bei der eine Plattenanordnung (10, 10i–11, 11i), die in Querrichtung benachbart sind und sich auf einem Grundteil oder Element (12) des Fahrzeugrahmens abstützen, eine Aussparung (13) aufweist, deren hakenförmige Seite (14) an einem Aufsatz (15) verankert ist, der sich über die gesamte Länge des Grundteils erstreckt, wobei eine Querbohrung einen Verbindungsbolzen (16) aufnimmt, der die Plattenanordnung durchsetzt, dadurch gekennzeichnet, daß die untere Fläche des Grundteils (12) einen Vorsprung (20) aufweist mit konvexem Umfang, der an den zugehörigen Wänden (21, 22) der Aussparung (13) anliegt, die in zwei benachbarten Platten (10, 11) ausgebildet sind, wobei die entsprechenden Ausrichtungen des Umfangs und der Wände derart zusammenwirken, daß eine Stützkraft der Platten (10, 11) gegen die Vorderfläche (18) des Grundteils (12) entsteht sowie gegen den Umfang des Vorsprungs, wenn die benachbarten Platten (10, 11) unter der Einwirkung des Verbindungsbolzens (17) in Richtung zueinander zusammengedrückt werden.

2. Gegengewichtvorrichtung nach Anspruch 1, dadurch gekennzeichnet, daß die Mittenplatten (10, 11) miteinander durch zwei Verbindungsbolzen (17) verbunden sind, so daß diese Platten (10, 11) sich auf dem Vorsprung (20) abstützen.

**Claims**

1. A counterweight arrangement in the form of removable plates, in particular for vehicles for agricultural use, in which an assembly of plates (10, 11i–11, 11i) wich are juxtaposed in the transverse direction and suspended on a chassis element or mounting portion (12) of the vehicle have an opening (13) whose side in the form of a hock (14) is hooked to a shoulder (15) which extends over the entire length of the mounting portion, and a transberse hole for receiving an assembly bolt (16) through said assembly of plates, characterised in that the bottom face of the mounting portion (12) comprises a boss (20) of convex contour adjoining the corresponding walls (21, 22) of the opening (13) which is simultaneously formed on two juxtaposed plates (10, 11), the respective orientations of said contour and said walls cooperating so as to generate a forche for causing the plates (10, 11) to bear against the front face (18) of the mounting portion (12) and on the contour of the boss when said juxtaposed plates (10, 11) are tightened towards each other under the effect of connecting bolts (17).

2. A counterweight arrangement according to claim 1 characterised in that the middle plates (10, 11) are connected together by two connecting bolts (17) causing said plates (10, 11) to bear against the boss (20).

EP 0 270 454 B1

FIG.1

FIG.4

FIG.5

## FIG.2

## FIG.3

EP 0 270 454 B1